# FASCICULE DE BREVET EUROPEEN

(11) **EP 2 379 352 B1**
(45) Date de publication et mention de la délivrance du brevet: **20.03.2013**
(21) Numéro de dépôt: 09799057.6
(22) Date de dépôt: 02.12.2009
(51) Int. Cl.: B60C 11/11, B60C 11/04

(54) **BANDE DE ROULEMENT A VOLUME DE DRAINAGE AMELIORE**
PROFIL MIT EINEM VERBESSERTEN ABLAUFRAUM
TREAD WITH AN IMPROVED DRAINAGE SPACE

(30) Priorité: 22.12.2008 FR 0858893
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BARRAUD, Jacques, F-63100 Clermont-Ferrand (FR); POULBOT, Agnès, F-63430 Les Martres D'artiere (FR)
(74) Mandataire: Diernaz, Christian
(86) Numéro de dépôt international: PCT/EP2009/066219
(87) Numéro de publication internationale: WO 2010/072523

(56) Documents cités:
- EP-A- 1 103 362
- WO-A-03/097384
- FR-A- 2 763 892

## Description

Cette invention concerne le domaine des bandes de roulement de pneu et plus spécifiquement, cette invention concerne des bandes de roulement de pneu pour véhicules de type poids lourd, ces bandes de roulement ayant une surface de roulement dont la géométrie varie avec l'usure. Cette invention concerne également un moule pour le moulage de telles bandes.

Les bandes de roulement de pneu s'étendent dans la direction circonférentielle sur l'extérieur d'un pneu pour assurer le contact entre le pneu et la chaussée. Le contact entre la bande de roulement de pneu et la chaussée se produit suivant une empreinte de contact. Une bande de roulement a pour fonction de fournir une adhérence suffisante afin d'empêcher le glissement du pneu qui peut survenir au cours de manoeuvres d'accélération, de freinage ou encore de virage. Une bande de roulement de pneu comprend des éléments de relief, tels que des nervures ou des blocs, ces éléments de relief étant délimités par des rainures (c'est-à-dire des découpures de largeur moyenne supérieure à 2 mm). En outre, ces éléments de relief peuvent être pourvus d'incisions, c'est-à-dire des découpures de largeur au plus égale à 2 mm. Ces incisions ont pour fonction de créer des arêtes supplémentaires tout en conservant une quantité de matière caoutchoutique importante. Ces incisions peuvent être de type bloquant c'est-à-dire comporter, sur les parois en vis-à-vis les délimitant, des moyens limitant les mouvements relatifs desdites parois.

Un problème que chaque fabricant de pneu cherche à résoudre est d'augmenter le kilométrage d'usage pour une bande de roulement de pneu avant de devoir la remplacer. Une solution consiste à augmenter l'épaisseur de la bande de roulement ; si cette augmentation va dans le bon sens en donnant davantage de matière à user, on constate une augmentation sensible de la perte par hystérèse et donc de la résistance au roulement (c'est-à-dire la quantité d'énergie consommée par le pneu pendant le roulage). En conséquence, il est plutôt souhaitable de réduire l'épaisseur d'une bande de roulement de pneu ce qui a pour effet d'augmenter la rigidité de bande de roulement, et, ainsi réduire les pertes thermiques par hystérèse. Dans cette alternative, il est possible d'utiliser des compositions à base de caoutchouc ayant une performance améliorée en usure. La diminution de l'épaisseur de bande de roulement peut permettre l'usage de compositions de caoutchouc ayant une hystérèse supérieure.

Un autre problème commun posé aux fabricants de pneu est de maintenir les performances des pneus tout au long de leur usage, c'est-à-dire quelque soit l'état d'usure de la bande de roulement. De façon usuelle, le volume en creux des rainures, nécessaire pour assurer un bon drainage de l'eau lors de roulage sur chaussée mouillée, diminue avec l'usure de la bande. L'invention a pour objectif d'obtenir une bande de roulement dont la performance en adhérence après une usure partielle est maintenue tout en conservant à cette bande une résistance au roulement faible et une bonne performance en usure.

En conséquence, il existe un besoin de bande de roulement de pneu qui comporte un volume de découpures après usure partielle sans pour autant altérer la performance du pneu quelque soit son niveau d'usure et notamment à l'état neuf.

L'invention consiste en une bande de roulement de pneu ayant une surface de roulement pour venir en contact avec la chaussée, cette bande comprenant au moins deux couches d'usure se superposant dans l'épaisseur de la bande, chaque couche d'usure ayant une épaisseur. À l'état neuf, cette bande de roulement a :

- une première couche d'usure formée par une pluralité d'éléments de relief comprenant chacun une surface de contact, cette première couche comprenant au moins des rainures d'orientation générale circonférentielle, cette première couche étant destinée à être en contact avec la chaussée lorsque la bande est neuve et jusqu'à une usure correspondant à l'épaisseur de cette couche d'usure,

au moins une autre couche d'usure venant en contact avec la chaussée après que la première couche soit entièrement usée, cette au moins une autre couche d'usure comportant au moins un canal s'étendant dans la direction générale circonférentielle, ce au moins un canal débouchant sur la surface de roulement dès que ladite couche d'usure est atteinte après usure complète de la couche d'usure qui la précède.

Cette bande de roulement est telle que chaque couche d'usure, distincte de la première couche d'usure, comporte en outre une pluralité d'incisions transversales réparties dans la direction circonférentielle, chaque incision transversale s'étendant à partir d'un canal de la couche considérée dans une direction qui n'est pas circonférentielle pour déboucher totalement ou en partie dans au moins une autre rainure ou canal d'orientation circonférentielle et cela quelque soit le niveau d'usure de ladite autre couche d'usure.

Ainsi on peut réduire les profondeurs des rainures longitudinales à l'état neuf et faire apparaître de nouvelles rainures après une usure partielle ayant usé la première couche d'usure et dans le même temps faire apparaître des incisions transversales dans la nouvelle couche d'usure. On limite ainsi de façon sensible la compressibilité de la bande et en conséquent on limite la dissipation d'énergie dans la bande à l'état neuf, d'autant que les incisions ne débouchent pas sur la surface de roulement à l'état neuf mais n'apparaissent qu'après une usure partielle afin de conférer à la bande une motricité satisfaisante en deuxième partie d'utilisation.

Il est par ailleurs essentiel que chaque nouvelle incision transversale débouche dans une autre rainure afin d'avoir un découplage mécanique entre les éléments de la bande de roulement situés de part et d'autre de cette incision. Ceci afin d'empêcher que la partie de l'élément sortant de la région de contact entraîne la partie du même élément située de l'autre côté de l'incision.

Dans une variante avantageuse, le volume de drainage maximal de chaque couche d'usure est au moins égal à 60% du volume de drainage maximal de la première couche d'usure, c'est-à-dire du volume de drainage de la bande de roulement à l'état neuf. Le volume de drainage maximal d'une couche d'usure est évalué en multipliant la longueur moyenne de l'empreinte de contact sous des conditions nominales d'usage par la somme des aires des sections des rainures débouchant sur la surface de roulement de la couche d'usure considérée.

Dans un perfectionnement de l'invention, la première couche d'usure de la bande de roulement comprend en outre une pluralité de trous, chaque trou débouchant sur la surface de roulement à l'état neuf de la bande et dans un canal de la couche d'usure interne qui suit la première couche. Chaque trou a des dimensions principales de section qui sont au moins égales à 30% et encore plus préférentiellement au moins égales à 50% de la dimension transversale du canal dans lequel ce trou débouche. Par dimensions principales de section d'un trou on entend ici son diamètre si le trou a une section de forme circulaire, ses petit et grand axes si sa section est ovale ou ses largeur et longueur s'il est de section rectangulaire.

Préférentiellement, le nombre de trous débouchant dans un canal est choisi de façon qu'il y ait une pluralité de trous dans la région de contact de la bande de roulement avec la chaussée. Il est avantageux que ce nombre soit tel que le pas entre deux trous successifs soit inférieur ou égal au cinquième de la longueur moyenne de l'empreinte de contact. La longueur moyenne de l'empreinte de contact est déterminée pour des conditions de pression et de charge correspondant aux conditions nominales d'usage du pneu pourvu de la bande (ces conditions sont fournies, notamment, par l'E.T.R.T.O.). La présence de ces trous a pour avantage à la fois de réduire la température dans la bande par ventilation et en outre une meilleure révélation de la nouvelle rainure après usure complète d'une couche d'usure située immédiatement au dessus (c'est-à-dire entre la couche d'usure contenant le canal et la surface de roulement de la bande). On a en effet constaté que la manière dont se révèle une nouvelle rainure à partir d'un canal pouvait être améliorée par la présence de trous qui créent des sortes de discontinuités sur la partie limitant le canal qui vient la première en contact avec la chaussée après usure de la couche précédente.

Avantageusement, chaque trou débouche dans un canal à l'endroit où prend naissance une incision transversale débouchant dans ledit canal.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 est une vue partielle d'une bande de roulement selon invention comportant deux couches d'usure dans l'épaisseur ;

la figure 2 est une vue en coupe selon la ligne II-II de la bande de roulement montrée à la figure 1 ;

la figure 3 montre une vue en plan de la surface de roulement quand la deuxième couche d'usure de la bande de roulement montrée à la figure 1 est atteinte ;

la figure 4 est une vue d'une variante de l'invention comprenant une pluralité de trous reliant chaque canal à la surface de roulement de la bande à l'état neuf ;

la figure 5 est une vue en coupe de la variante montrée avec la figure 4;

la figure 6 montre une variante de bande de roulement selon l'invention comportant trois couches d'usure dans son épaisseur ;

la figure 7 montre une vue de la surface de roulement d'une autre variante de bande selon l'invention dont les incisions débouchent sur ladite surface ;

la figure 8 est une vue en coupe selon la ligne VIII-VIII de la bande montrée avec la figure 7.

DÉFINITIONS :

- Le plan équatorial du pneu est un plan qui est perpendiculaire à l'axe de rotation du pneu et qui divise ledit pneu en deux demi pneus. Ce plan équatorial contient notamment les points du pneu radialement les plus éloignés de l'axe de rotation.

- Un premier point est dit radialement à l'extérieur d'un deuxième point, lorsque ce premier point est à une distance de l'axe de rotation qui est plus grande que la distance du deuxième par rapport à cet axe de rotation.

- Une coupe méridienne d'un pneu est une coupe du pneu réalisée dans un plan contenant l'axe de rotation du pneu.

- Par direction circonférentielle, on entend ici une direction tangente en tout point d'un cercle centré sur l'axe de rotation.

- Par direction radiale, on entend ici une direction perpendiculaire à l'axe de rotation.

- Par direction axiale ou transversale, on entend ici une direction qui est perpendiculaire à la direction radiale et qui est parallèle à l'axe de rotation du pneu.

DESCRIPTION DES FIGURES

Par faciliter la lecture, une même référence est employée pour toutes les variantes dont la description suit, dès lors que cette référence indique un élément de même structure et de même fonction.

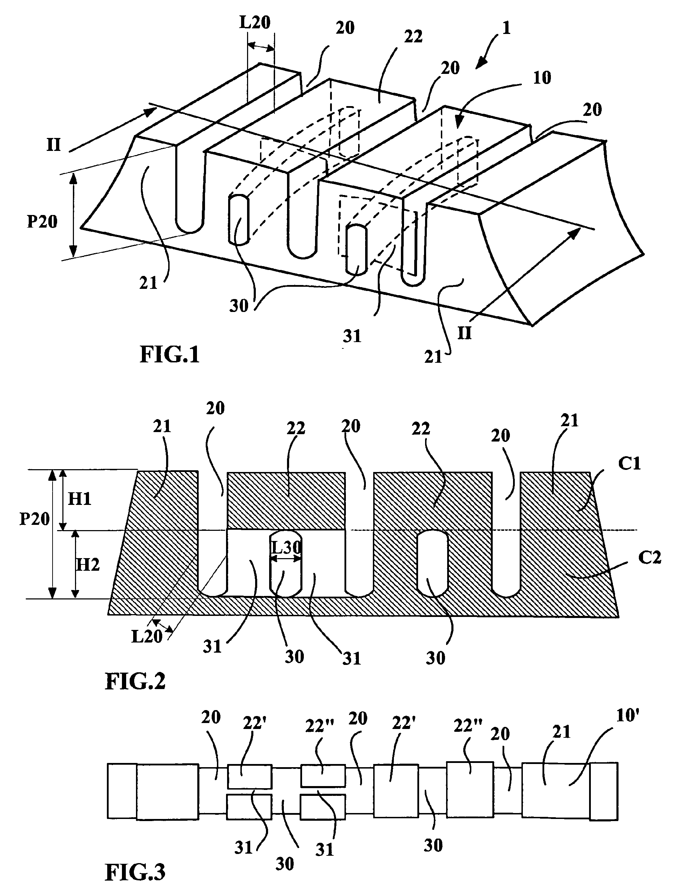

La figure 1 montre une vue partielle d'une bande de roulement 1 d'un pneu construite selon l'invention. Cette bande 1 comprend une sculpture formée par trois rainures principales 20 orientées circonférentiellement et délimitant des nervures intermédiaires 22 et axialement de part et d'autre de ces nervures intermédiaires des nervures bord 21, ces rainures débouchant sur une surface de roulement 10 destinée à être en contact avec la chaussée pendant le roulage. La bande 1 représentée ici correspond à la bande à l'état neuf non usée. Dans cet état, les rainures ont une même profondeur P20 et une largeur L20 utiles notamment pour drainer l'eau présente sur la chaussée par temps de pluie. On distingue sur cette première figure la présence de canaux 30 orientés circonférentiellement dans les deux nervures intermédiaires 22 ; en outre ces canaux sont coupés par des incisions 31 débouchant dans les rainures 20.

Sur la figure 2 on montre une coupe selon un plan de coupe repéré par sa trace II-II sur la surface de roulement 10 de la bande de roulement montrée avec la figure 1. Sur cette coupe on voit que les canaux 30 sont à une distance H1 de la surface de roulement à l'état neuf : cette épaisseur H1 définit une première couche d'usure dans laquelle seules les rainures 20 sont présentes et actives. Les canaux 30 ont une hauteur H2 mesurée selon l'épaisseur de la bande : cette hauteur H2 définit une deuxième couche d'usure C2 qui rend actif à la fois les rainures principales 20 et de nouvelles rainures formées dès que l'usure de la bande est au moins égale à la hauteur H1.

En outre on distingue de part et d'autre de chaque canal une incision se prolongeant jusqu'aux rainures 20 : ainsi quand l'usure atteint la deuxième couche d'usure C2 (après usure totale de la première couche d'usure C1, les canaux forment de nouvelles rainures venant compléter les rainures 20. Ainsi on augmente sensiblement la surface de rainure en contact avec la chaussée, tout en retrouvant un volume de rainures sensiblement identique à ce qu'il était à l'état neuf. Par ailleurs la présence des incisions transversales 31 uniquement dans la deuxième couche d'usure permet d'avoir à l'état initial de la bande une rigidité d'ensemble importante et bénéfique pour réduire les pertes hystérétiques par déformation, tout en créant un découplage mécanique entre les parties des nouvelles nervures situées de part et d'autre de ces incisions lorsque la deuxième couche d'usure est active dans le contact avec la chaussée.

La figure 3 montre une vue en plan de la nouvelle surface de roulement 10' quand la deuxième couche d'usure de la bande de roulement devient active. Chaque nervure 22 est remplacée par de nouvelles nervures 22' et 22", ces nouvelles nervures délimitant la rainure formée par le canal 30 débouchant sur la nouvelle surface de roulement 10'. On distingue sur cette figure 3, que ces nouvelles nervures présentent des discontinuités dans la direction circonférentielle grâce à la présence des incisions 31 débouchant à la fois dans une rainure 20 et dans le canal 30 ; dès lors qu'il y a une pluralité d'incisions en permanence dans le contact, ces discontinuités permettent un découplage mécanique entre les parties d'une même nouvelle nervure 22' ou 22" situées circonférentiellement de part et d'autre de chaque incision.

Sur la figure 2 on voit que les rainures 20 débouchent sur la surface de roulement 10 de la bande de roulement à l'état neuf et ont toutes une même largeur L20 et une même profondeur P20 ; cette profondeur P20 est sensiblement égale à la somme des hauteurs H1 et H2 des première et seconde couches d'usure respectivement C1 et C2. Dans le cas présent, le volume de drainage de la première couche d'usure est égal à trois fois le volume de drainage apporté par chaque rainure circonférentielle 20. Le volume de chaque rainure 20 est sensiblement proportionnel à l'aire de la section dans le plan de la figure de ladite rainure. Lorsque cette première couche d'usure est usée, c'est-à-dire lorsque la deuxième couche d'usure apparaît, le volume de drainage est à un niveau sensiblement égal à 75% du volume de la première couche d'usure à l'état neuf. Ce nouveau volume de drainage est obtenu en ajoutant au volume de drainage des trois rainures circonférentielles 20 de profondeur restante H2, les volumes des nouvelles rainures formées par les canaux 30.

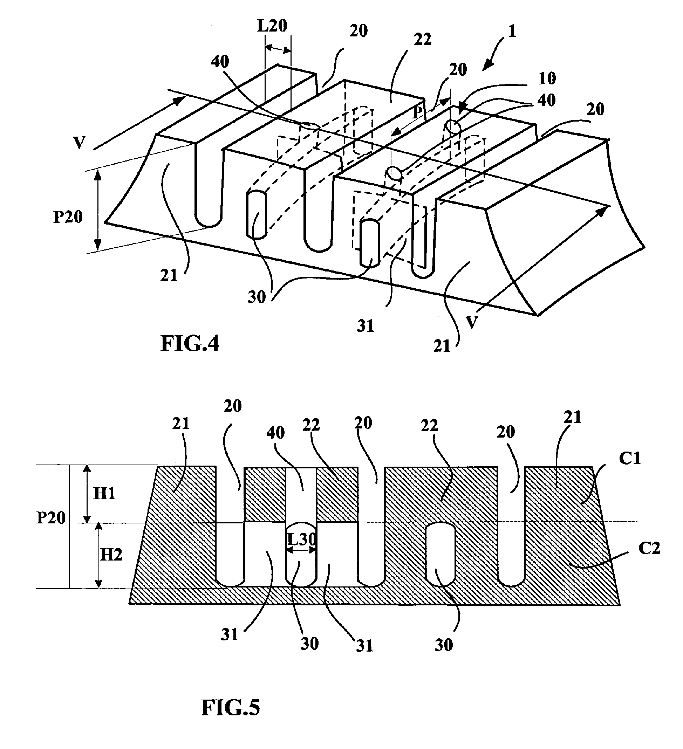

Dans la variante montrée avec les figures 4 et 5, un élément nouveau a été introduit par rapport à la variante des figures 1 à 3, à savoir la présence de trous de forme cylindrique de section circulaire, ces trous débouchant sur la surface de roulement de la bande de roulement à l'état neuf et traversant la première couche d'usure pour déboucher dans un canal 30.

Ces trous ont un diamètre égal à au moins 30% de la largeur L30 du canal 30. Dans le cas présent ce diamètre est égal à la largeur L30. Ces trous sont ici orientés dans la direction radiale mais la personne du métier peut les incliner si besoin. La forme de section de chaque trou peut également être elliptique ; avantageusement le grand axe de l'ellipse est orienté dans la direction circonférentielle.

Grâce à ces trous en nombre suffisant, c'est-à-dire avec un pas P inférieur au cinquième de la longueur de l'empreinte obtenue pour les conditions nominales du pneu pourvu de la bande, la formation des nouvelles rainures est sensiblement améliorée lors de l'usure de la bande de roulement. Il est, comme c'est le cas dans l'exemple montré, avantageux que ces trous coïncident avec la position des incisions connectant les canaux aux autres canaux ou aux rainures.

Pour les deux variantes qui viennent d'être décrites, le moulage peut être réalisé en moulant les diverses rainures, canaux et incisions et trous en employant un moule moulant la surface radialement externe et la surface radialement interne d'une bande avant d'incorporer ladite bande sur une ébauche de pneu à la manière d'un renouvellement d'une bande pour un pneu usé.

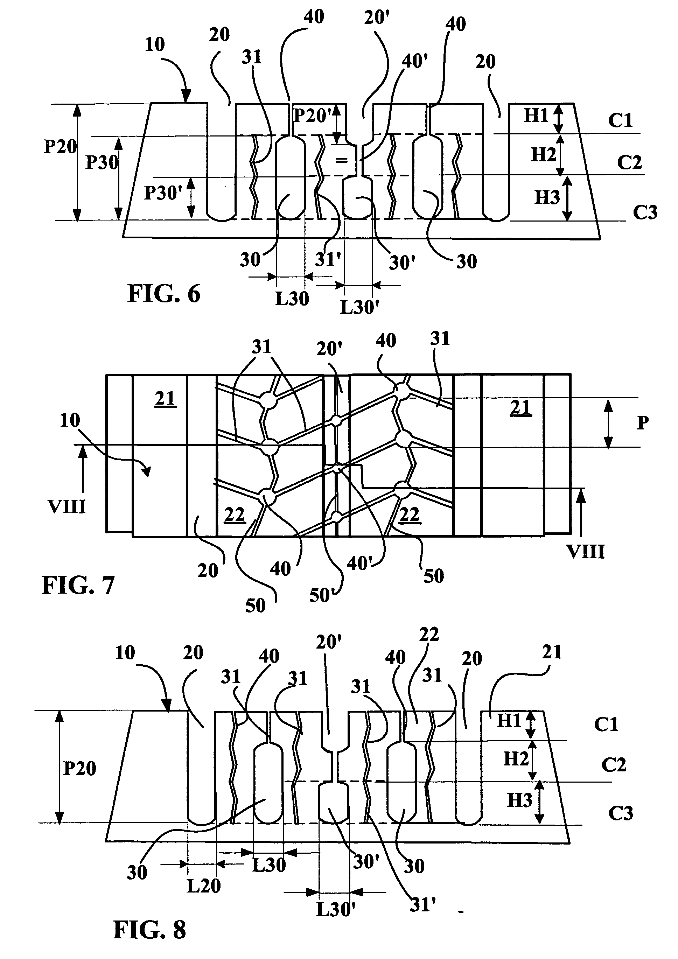

Une autre variante de bande de roulement selon invention est montrée en coupe avec la figure 6. Sur cette coupe on voit que la bande de roulement comprend trois couches d'usure respectivement C1, C2, C3 en allant de la première couche d'usure C1 visible sur la bande à l'état neuf. Ces couches d'usure ont des épaisseurs respectivement H1, H2, H3 allant croissant de la première couche d'usure vers la dernière la plus à l'intérieur de la bande. Lorsque la bande est neuve, seules les rainures 20 de profondeur P20 s'ouvrent sur la surface de roulement 10 ainsi qu'une autre rainure 20' dont la profondeur P20' est sensiblement égale à l'épaisseur H1 de la première couche d'usure C1.

Radialement à l'intérieur de cette rainure P20' on forme un canal 30' de largeur L30' et d'une profondeur P30' égale sensiblement à l'épaisseur de la troisième couche d'usure C3. Entre la rainure P20' et ce canal 30' sont formés une pluralité de trous 40' débouchant dans la rainure P20' et dans le canal 30'.

Axialement entre une rainure 20 et la rainure 20' on voit un canal 30 de profondeur P30 et de largeur L30, chaque canal étant pourvu de part et d'autre par des incisions 31 zigzag dans la profondeur et débouchant d'un côté dans ladite rainure 20 et de l'autre côté en partie dans la rainure 20' et en partie dans le canal 30'. Les canaux 30 sont pourvus de trous 40 les prolongeant radialement vers l'extérieur dans la première couche d'usure C1.

Le canal 30' formé sous la rainure 20' est pourvu de part et d'autre avec une pluralité d'incisions 31' zigzag dans la profondeur, ces incisions 31' débouchant dans les canaux 30.

La deuxième couche d'usure C2 de hauteur H2 est formée entre la partie la plus à l'extérieur des canaux 30 et la partie la plus à l'extérieur du canal 30' situé radialement sous la rainure 20'.

La dernière variante montrée avec les figures 7 et 8 est assez semblable à la variante de la figure 6, au moins une différence résidant dans le fait que les incisions 31 sont prolongées jusqu'en surface de roulement de la bande de roulement à l'état neuf. Dans cette variante, les incisions transversales d'une couche d'usure autre que la première couche d'usure sont prolongées par des incisions complémentaires traversant au moins une autre couche d'usure. Cette bande de roulement équipe un pneu de dimension 315/70 R22.5 ; les conditions nominales d'usage sont une pression de gonflage de 8 bars, une charge portée de 3000 daN. Sous ces conditions nominales, la longueur moyenne de l'empreinte de contact est égale à 200 mm.

Comme on le voit à la figure 7 montrant une vue en plan de la surface de roulement 10 de la bande de roulement à l'état neuf, trois rainures circonférentielles 20, 20' délimitent des nervures 21 formant les bords axiaux de la bande et des nervures 22 situées axialement entre les nervures bord. Sur cette figure 7, on voit qu'il est formé une pluralité de trous 40 sur chaque nervure intermédiaire 22, ces trous étant prolongés axialement de part et d'autre par des incisions 31 dont les traces sur la surface de roulement 10 sont inclinés de façon à faire un V. Dans le cas présent, les incisions 31 d'une nervure intermédiaire 22 forment un V pointant dans la direction opposée au V formé par les incisions de l'autre nervure intermédiaire. Au fond de la rainure 20', localisée sensiblement dans la plan médian de la bande de roulement, on voit des trous 40' de forme cylindrique. Vues sur la surface de roulement l'angle des incisions 31, 31' est ici de 30 degrés avec la direction transversale (c'est-à-dire la direction de l'axe de rotation du pneu pourvu de la bande).

En outre, les trous 40 et 40' sont reliés les uns aux autres sur chaque nervure 22 et dans le fond de la rainure 20' par une incision additionnelle respectivement 50, 50' de forme zigzag. Ces incisions 50, 50' débouchent à l'intérieur de la bande sur les canaux respectivement 30 et 30'. Dans ce cas, la première couche d'usure C1 est pourvue sur toute sa hauteur avec des incisions d'orientation circonférentielle (ou de manière équivalente : longitudinale) débouchant sur la surface de roulement à l'état neuf de la bande et se prolongeant jusqu'à la couche d'usure suivante pour déboucher sur un canal de cette couche suivante. Ces incisions additionnelles 50, 50' accentuent l'effet bénéfique produit par les trous (40) qu'elles relient pour une meilleure formation des nouvelles rainures lorsque les couches d'usure C2 et C3 apparaissent sur la surface de roulement après usure.

La figure 8 montre une coupe de cette bande selon une surface de coupe dont la trace sur la figure 7 suit la ligne VIII-VIII. Sur cette figure 8, on voit sensiblement la même coupe transversale qu'avec la figure 6 à la différence que les incisions 31 débouchent également sur la surface de roulement de la bande à l'état neuf. Par ailleurs les incisions 31' sont formées dans le prolongement des incisions 31 qui se trouvent axialement de part et d'autre. Grâce à cette disposition il est aisé de réaliser le moulage de cette bande en moulant celle-ci dans un moule pourvu d'éléments de relief appropriés pour le moulage des rainures, incisions et canaux sous jacents.

Le pas P entre les trous, quelle que soit la nervure considérée, est égal à 25 mm (c'est, dans le cas présent, également le pas entre les incisions transversales). Les trous formés sur les nervures 22 ont une section circulaire et un diamètre égal à 4 mm. La largeur L20 des rainures 20 est égale à 6 mm, leur profondeur P20 égale à 15 mm, la largeur L30 des canaux 30 est égale à 5 mm, la largeur L30' du canal 30' est égale à 8 mm (cette largeur L30' est égale à la largeur de la rainure 20' située radialement à l'extérieur du canal 30'). Les épaisseurs H1, H2, H3 des trois couches d'usure sont toutes égales à 5 mm. Le volume de drainage de la bande de roulement à l'état neuf calculé pour la longueur moyenne de l'empreinte de contact est égal sensiblement à 44 cm³. Le volume de drainage de la bande de roulement après usure de la première couche d'usure C1 et au moment de l'apparition de la deuxième couche d'usure C2 calculé pour la même longueur moyenne de l'empreinte de contact est égal sensiblement à 44 cm³. Le volume de drainage de la bande de roulement après usure de la deuxième couche d'usure C2 et au moment de l'apparition de la troisième couche d'usure C3 calculé pour la même longueur moyenne de l'empreinte de contact est égal sensiblement à 30 cm³.

On voit que grâce à la bande de roulement selon l'invention, on peut réduire le volume de drainage à l'état neuf tout en ayant, bien sûr, un volume suffisant pour une bonne performance de drainage lors d'un roulage sur sol revêtu d'eau. Cette réduction permet d'avoir une plus grande rigidité de la bande comparativement aux bandes de roulement usuelles. En outre, l'apparition de nouvelles rainures pour chaque nouvelle couche d'usure permet de maintenir un volume de drainage élevé comparativement aux bandes de roulement usuelles après la même usure. Dans le cas présent, le volume de drainage de la deuxième couche est égal au volume de drainage à l'état neuf, tandis que le volume de drainage de la troisième couche est maintenu à un niveau relativement important, si on le compare au volume de drainage de bande de roulement de l'état de la technique, puisque ce volume de drainage est égal à 68% du volume de drainage à l'état neuf.

Avantageusement, les incisions transversales des couches d'usure sont des incisions bloquantes au moins dans une direction, par exemple présentant des zigzag ou des ondulation dans la direction de la profondeur, ou dans plusieurs directions différentes, par exemple double zigzags ou double ondulations à la fois dans la direction de la profondeur et dans la direction de la longueur de l'incision.

Dans une autre variante non montrée ici, au moins certaines des incisions transversales sont prolongées à l'intérieur de la bande par une partie élargie formant un canal d'orientation générale transversale et débouchant à ses deux extrémités.

## Revendications

1. Bande de roulement (1) de pneu ayant une surface de roulement (10) pour venir en contact avec la chaussée, cette bande comprenant au moins deux couches d'usure (C1, C2, C3) se superposant dans l'épaisseur de la bande, cette bande de roulement (1) ayant une première couche d'usure (C1) et au moins une autre couche d'usure (C2, C3), la première couche d'usure (C1) étant formée par une pluralité d'éléments de relief (21, 22) comprenant chacun une surface de contact, cette première couche comprenant au moins des rainures d'orientation générale circonférentielle (20, 20'), cette première couche étant destinée à être en contact avec la chaussée lorsque la bande est neuve, chaque autre couche d'usure (C2, C3) venant en contact avec la chaussée après que la première couche (C1) soit entièrement usée, cette autre couche d'usure comportant au moins un canal (30) s'étendant dans la direction générale circonférentielle, ce au moins un canal (30) débouchant sur la surface de roulement dès que ladite couche d'usure est atteinte après usure complète de la couche d'usure qui la précède, cette bande de roulement étant **caractérisée en ce que** chaque couche d'usure (C2, C3), distincte de la première couche d'usure (C1), comporte une pluralité d'incisions transversales (31) réparties dans la direction circonférentielle, chaque incision transversale s'étendant à partir d'un canal (30) de la couche considérée dans une direction qui n'est pas circonférentielle pour déboucher totalement ou en partie dans au moins une autre rainure ou canal d'orientation circonférentielle et cela quelque soit l'usure de ladite autre couche d'usure.

2. Bande de roulement (1) selon la revendication **1 caractérisée en ce que** la première couche d'usure (C1) comprend une pluralité de trous (40), chaque trou débouchant sur la surface de roulement (10) à l'état neuf de la bande et dans un canal (30) de la couche d'usure interne (C2) suivant la première couche d'usure (C1), chaque trou (40) ayant des dimensions principales de section qui sont au moins égales à 30% de dimension transversale du canal (30) dans lequel ledit trou débouche.

3. Bande de roulement selon la revendication 2 **caractérisée en ce que** chaque trou (40) débouche dans un canal (30) à l'endroit où prend naissance au moins une incision transversale (31) débouchant dans ledit canal.

4. Bande de roulement selon la revendication **2** ou la revendication **3 caractérisée en ce que** le pas (P) entre deux trous successifs est inférieur ou égal au cinquième de la longueur moyenne de l'empreinte de contact.

5. Bande de roulement selon l'une quelconque des revendications **1 à 4 caractérisée en ce que** la première couche d'usure (C1) est pourvue d'une incision d'orientation longitudinale (50) débouchant sur la surface de roulement (10) à l'état neuf de la bande et se prolongeant jusqu'à la couche d'usure suivante (C2) pour déboucher dans un canal (30) de cette couche suivante, cette incision d'orientation longitudinale (50) reliant les trous (40) entre eux.

6. Bande de roulement selon l'une des revendications **1 à 5 caractérisée en ce que** les incisions transversales des couches d'usure sont des incisions bloquantes au moins dans une direction.

7. Bande de roulement selon l'une quelconque des revendications **1 à 6 caractérisée en ce que** les incisions transversales d'une couche d'usure autre que la première couche d'usure sont prolongées par des incisions complémentaires traversant au moins une autre couche d'usure.

8. Bande de roulement selon l'une des revendications **1 à 7 caractérisée en ce qu'**au moins certaines des incisions transversales sont prolongées à l'intérieur de la bande par une partie élargie formant un canal d'orientation générale transversale et débouchant à ses deux extrémités.

9. Bande de roulement selon l'une des revendications **1 à 8 caractérisée en ce que** le volume de drainage maximal de chaque couche d'usure est au moins égal à 60% du volume de drainage maximal de la première couche d'usure, c'est-à-dire du volume de drainage de la bande de roulement à l'état neuf.

## Claims

1. Tyre tread band (1) having a tread surface (10) to come into contact with the road surface, this tread band comprising at least two wearing layers (C1, C2, C3) which are superposed in the thickness of the tread, this tread band (1) having a first wearing layer (C1) and at least one other wearing layer (C2, C3), the first wearing layer (C1) being formed by a plurality of raised elements (21, 22) each comprising a contact surface, this first layer comprising at least grooves (20, 20') of circumferential overall orientation, this first layer being intended to be in contact with the road surface when the tread is new, each other wearing layer (C2, C3) coming into contact with the road surface after the first layer (C1) has entirely worn away, this other wearing layer comprising at least one channel (30) extending in the circumferential overall direction, this at least one channel (30) opening onto the tread surface as soon as the said wearing layer is reached after the wearing layer that proceeds it has completely worn away, this tread band being **characterized in that** each wearing layer (C2, C3), distinct from the first wearing layer (C1), comprises a plurality of transverse incisions (31) distributed in the circumferential direction, each transverse incision extending from a channel (30) of the layer in question in a direction which is not circumferential so as to open fully or partially into at least one other circumferentially oriented channel or groove, and do so irrespective of the level of wear of the said other wearing layer.

2. Tread band (1) according to Claim 1, **characterized in that** the first wearing layer (C1) comprises a plurality of holes (40), each hole opening onto the tread surface (10) when the tread is in the new condition and into a channel (30) of the inner wearing layer (C2) that follows the first wearing layer (C1), each hole (40) having main cross-sectional dimensions which are at least equal to 30% of the transverse dimension of the channel (30) into which the said hole opens.

3. Tread band according to Claim 2, **characterized in that** each hole (40) opens into a channel (30) at the point at which at least one transverse incision (31) opening into the said channel starts.

4. Tread band according to Claim 2 or Claim 3, **characterized in that** the spacing (P) between two successive holes is less than or equal to one-fifth of the mean length of the contact patch.

5. Tread band according to any one of Claims 1 to 4, **characterized in that** the first wearing layer (C1) is provided with one longitudinally oriented incision (50) opening onto the tread surface (10) when the tread is in the new condition and extending as far as the next wearing layer (C2) to open into a channel (30) of this next layer, this longitudinally oriented incision (50) linking the holes (40) together.

6. Tread band according to one of Claims 1 to 5, **characterized in that** the transverse incisions of the wearing layers are incisions that are blocking in at least one direction.

7. Tread band according to any one of Claims 1 to 6, **characterized in that** the transverse incisions in a wearing layer other than the first wearing layer are extended by complementary incisions that pass through at least one other wearing layer.

8. Tread band according to one of Claims 1 to 7, **characterized in that** at least some of the transverse incisions are extended on the inside of the tread by a widened part that forms a channel of transverse overall orientation open at both ends.

9. Tread band according to one of Claims 1 to 8, **characterized in that** the maximum drainage volume of each wearing layer is at least equal to 60% of the maximum drainage volume of the first wearing layer, namely of the drainage volume of the tread band in the new condition.

## Patentansprüche

1. Laufstreifen (1) eines Reifens, der eine Lauffläche (10) hat, um mit der Straße in Kontakt zu kommen, wobei dieser Streifen mindestens zwei Verschleißschichten (C1, C2, C3) enthält, die in der Dicke des Streifens übereinander liegen, wobei dieser Laufstreifen (1) eine erste Verschleißschicht (C1) und mindestens eine weitere Verschleißschicht (C2, C3) hat, wobei die erste Verschleißschicht (C1) von einer Vielzahl von Reliefelementen (21, 22) geformt wird, die je eine Kontaktfläche enthalten, wobei diese erste Schicht mindestens Rillen von allgemeiner Umfangsausrichtung (20, 20') enthält, wobei diese erste Schicht dazu bestimmt ist, mit der Straße in Kontakt zu sein, wenn der Streifen neu ist, wobei jede weitere Verschleißschicht (C2, C3) mit der Straße in Kontakt kommt, nachdem die erste Schicht (C1) vollständig abgenutzt ist, wobei diese weitere Verschleißschicht mindestens einen Kanal (30) aufweist, der sich in der allgemeinen Umfangsrichtung erstreckt, wobei dieser mindestens eine Kanal (30) an der Lauffläche mündet, sobald die Verschleißschicht nach vollständiger Abnutzung der vor ihr liegenden Verschleißschicht erreicht wird, wobei dieser Laufstreifen **dadurch gekennzeichnet ist, dass** jede Verschleißschicht (C2, C3), die sich von der ersten Verschleißschicht (C1) unterscheidet, eine Vielzahl von Quereinschnitten (31) aufweist, die in der Umfangsrichtung verteilt sind, wobei jeder Quereinschnitt sich ausgehend von einem Kanal (30) der betrachteten Schicht in einer Richtung erstreckt, die keine Umfangsrichtung ist, um vollständig oder teilweise in mindestens eine andere Rille oder anderen Kanal mit Umfangsausrichtung zu münden, und dies unabhängig vom Verschleiß der weiteren Verschleißschicht.

2. Laufstreifen (1) nach Anspruch 1, **dadurch gekennzeichnet, dass** die erste Verschleißschicht (C1) eine Vielzahl von Löchern (40) enthält, wobei jedes Loch an der Lauffläche (10) im Neuzustand des Streifens und in einen Kanal (30) der inneren Verschleißschicht (C2), die auf die erste Verschleißschicht (C1) folgt, mündet, wobei jedes Loch (40) Hauptquerschnittsabmessungen hat, die mindestens gleich 30% der Querabmessung des Kanals (30) sind, in den das Loch mündet.

3. Laufstreifen nach Anspruch 2, **dadurch gekennzeichnet, dass** jedes Loch (40) in einen Kanal (30) an der Stelle mündet, an der mindestens ein in den Kanal mündender Quereinschnitt (31) beginnt.

4. Laufstreifen nach Anspruch 2 oder Anspruch 3, **dadurch gekennzeichnet, dass** der Abstand (P) zwischen zwei aufeinanderfolgenden Löchern geringer als das oder gleich dem Fünftel der mittleren Länge des Kontaktabdrucks ist.

5. Laufstreifen nach einem der Ansprüche 1 bis 4, **dadurch gekennzeichnet, dass** die erste Verschleißschicht (C1) mit einem Einschnitt mit Längsausrichtung (50) versehen ist, der an der Lauffläche (10) im Neuzustand des Streifens mündet und sich bis zur folgenden Verschleißschicht (C2) verlängert, um in einen Kanal (30) dieser folgenden Schicht zu münden, wobei dieser Einschnitt mit Längsausrichtung (50) die Löcher (40) miteinander verbindet.

6. Laufstreifen nach einem der Ansprüche 1 bis 5, **dadurch gekennzeichnet, dass** die Quereinschnitte der Verschleißschichten in mindestens einer Richtung blockierende Einschnitte sind.

7. Laufstreifen nach einem der Ansprüche 1 bis 6, **dadurch gekennzeichnet, dass** die Quereinschnitte einer anderen Verschleißschicht als die erste Verschleißschicht durch komplementäre Einschnitte verlängert werden, die mindestens eine weitere Verschleißschicht durchqueren.

8. Laufstreifen nach einem der Ansprüche 1 bis 7, **dadurch gekennzeichnet, dass** mindestens bestimmte der Quereinschnitte im Inneren des Streifens durch einen verbreiterten Bereich verlängert werden, der einen Kanal von allgemeiner Querausrichtung formt und an seinen zwei Enden mündet.

9. Laufstreifen nach einem der Ansprüche 1 bis 8, **dadurch gekennzeichnet, dass** das maximale Drainagevolumen jeder Verschleißschicht mindestens gleich 60% des maximalen Drainagevolumens der ersten Verschleißschicht, d.h. des Drainagevolumens des Laufstreifens im Neuzustand ist.
